# EUROPEAN PATENT APPLICATION

(11) **EP 4 585 284 A1**
(43) Date of publication of application: **16.07.2025**
(21) Application number: 23862567.7
(22) Date of filing: 08.09.2023
(51) Int. Cl.: B01D 1/16, B01D 1/20, B01D 1/28, B01D 3/00, C02F 1/12

(54) **GRAVITATIONAL VAPOUR COMPRESSOR DEVICE**

(30) Priority: 08.09.2022 ES 202231457 U; 13.04.2023 ES 202330618 U
(71) Applicant: WGA WATER GLOBAL ACCESS, S.L., Sispony AD400 (AD); Nomen Calvet, Juan Eusebio, L'Aldosa AD400 (AD); Hanganu, Dan Alexandru, 08294 El Bruc (Barcelona) (ES)
(72) Inventor: NOMEN CALVET, Juan Eusebio, AD400 (AD); HANGANU, Dan Alexandru, 08294 Barcelona (ES)
(74) Representative: Elion IP, S.L.
(86) International application number: PCT/ES2023/070546
(87) International publication number: WO 2024/052584

(57) **Abstract**

The present invention relates to a gravitational vapor compressor (GVC) device comprising at least one vertical compression chamber (16) and a plurality of droplet spray generating nozzles (10) are arranged at the top thereof, which nozzles form a flow of droplets in the water vapor flow along a height h₁ of the vertical shell (16). The speed of the droplets from the droplet beams (10) is adjusted along the height h₁ to the terminal fall velocity in relation to a gas flow, the compression chamber (16) has a height h₂ from which droplets fall at the same or similar terminal velocity inside a water vapor flow, which compresses the water vapor. The gravitational vapor compressor device further comprises a secondary vapor outlet duct (13).

## Description

### OBJECT OF THE INVENTION

The present invention refers to a device that compresses water vapor using liquid water falling vertically at terminal velocity, which uses the terrestrial gravitational field as a dispenser of the delivered mechanical power, creating an optimal regime of low and uniform relative speeds that reduces energy dissipation and maximizes energy transfer and, consequently, the efficiency of the vapor compression process.

### BACKGROUND OF THE INVENTION

Currently, water vapor compression systems are classified into three groups according to the compressing agent: thermal vapor compression, mechanical vapor compression and vapor compression by kinetic energy of liquid water. These water vapor compressors are used in desalination or water purification facilities.

Thermal vapor compression increases the temperature and pressure of a vapor flow by means of an ejector to which a motive vapor of higher temperature and pressure is supplied. These are vapor compression systems whose use is conditioned by the availability of residual vapor for use as motive vapor for the ejector. These devices have high specific energy consumption and in their industrial application to multi-effect desalination processes (MED) result in specific aggregate energy consumption of thermal and electrical energy of over 6 kWhₑ/m³ to desalinate seawater with 35,000 ppm total dissolved solids.

Mechanical vapor compression consists of increasing the pressure of a vapor flow as it passes through a mechanical compressor. These systems have a capacity limited by the volume of the compressor's compression chamber and suffer from problems of vapor superheating above the pressure-temperature equilibrium curve of saturated vapor. These devices have high specific energy consumption and, when used in industrial multi-effect desalination processes, result in specific electrical energy consumption of over 6 kWh/m³ to desalinate seawater with a total dissolved solid content of 35,000 ppm.

Vapor compression by input of kinetic energy in the form of the velocity of fine liquid water droplets currently consists of inputting energy to a flow of saturated water vapor through a flow of liquid water droplets at a high relative velocity with respect to the vapor flow. This is the technology known as HID, or hydraulic injection desalination, which consists of transforming the potential energy of pressurized water, provided by a pressure pump, into the kinetic energy of high-speed droplets which is in turn transformed into the potential energy of a flow of water vapor compressed by the drag forces generated by the liquid water droplets slowed down by the gaseous medium of water vapor. The HID vapor compression system has a higher energy efficiency than other current vapor compression systems, but it has limitations due to nozzle pressure drop, low energy efficiency in the process of high-speed droplet formation due to the design of current nozzles, and energy dissipation that occurs at high relative velocities of water droplets in a saturated water vapor medium. These devices have low specific energy consumption and, in their industrial application to desalination processes, result in specific energy consumption of around 3 kWh/m³ to desalinate seawater with 35,000 ppm total dissolved solids, using the current commercially available droplet-generating nozzles.

Vapor compression by liquid water input should not be confused with old desalination systems that use jets of cold water droplets as a point of condensation for water vapor, in which the liquid water droplets do not act as a vapor compression agent but rather as a condensing surface that absorbs the latent heat of condensation of the water vapor, and which are very inefficient condensation systems since they do not recycle the latent heat of condensation. It is known that the interaction of the forces of cohesion and adhesion of water molecules with the solid surface of a container produces a curvature of the liquid-vapor interface known as a meniscus of water or aqueous solution.

It is also known that a meniscus of water is divided into three regions characterized by having very different behaviors with respect to the transmission of heat through the liquid film and the solid-liquid interfacial adhesion force. These three regions are the adsorption region, the transition region, and the bulk region of the meniscus. It is known that the thickness of the liquid water film is smallest in the adsorption region, but the thin liquid film remains strongly adhered to the solid substrate due to the intermolecular forces between the liquid and the solid. In this adsorption region, the thermal resistance to conduction is small and the thermal resistance at the interface is high. In the bulk region of the meniscus, due to the great thickness of the water film, the thermal resistance by conduction is great and the thermal resistance at the interface is small. The transition region is found between the adsorption region and the bulk region of the meniscus. This transition region is characterized by a low thermal resistance by conduction resulting from the reduced thickness of the water layer and by a low thermal resistance at the interface.

A reference disclosure in this area is the article "Review of the Effects of Surface Topography, Surface Chemistry, and Fluid Physics on Evaporation at the Contact Line", by Joel L. Plawsky, of Rensselaer Polytechnic Institute in New York.

It is known that in water or an aqueous solution that is in contact with the solid walls of a container, a curvature of the liquid-gas interface is produced by the effect of the resultant of the forces of adhesion and cohesion. It is known that, if the walls are close together, the liquid-vapor interface is curved over its entire amplitude between wall and wall. It is known that, if the walls of the container are at a greater distance than that at which the forces of adhesion of the water molecules on the walls act, then the liquid-gas interface is flat in the central area between walls and only curves in the proximity of the walls.

### SUMMARY OF THE INVENTION

The present invention is defined in the Claims section.

A device that compresses water vapor through the drag forces generated by liquid water in free fall at a terminal velocity subjected to gravitational forces that we call Gravitational Vapor compressor or Compression (GVC), has the capacity to compress water vapor with a higher efficiency than current vapor compression systems and devices.

The GVC device uses the drag force of a liquid droplet subjected to the force of gravity in relative motion with respect to a gaseous medium of water vapor to increase the pressure of the vapor itself.

The GVC device has a total height h that is divided into two zones: an initial velocity adjustment zone with a height h₁, in which the liquid droplet's velocity is adjusted from its initial velocity as it leaves the nozzle until it reaches a relative velocity with respect to the vapor flow close to or equal to its terminal velocity corresponding to the size of the droplet, and a zone with a height h₂, in which the liquid droplet's velocity is maintained, due to gravity, at a relative velocity with respect to the vapor close to or equal to the terminal velocity of free fall in the water vapor environment, which corresponds to its size and the density and viscosity of the water vapor crossed.

Throughout the height h₁ of the gravitational vapor compressor GVC the kinetic energy of the droplet is variable, with a positive effect on vapor compression if the drop outlet velocity is higher than the sum of the vapor flow velocity plus the drop terminal fall velocity, and a negative effect on vapor compression if the drop outlet velocity is lower than the sum of the vapor flow velocity plus the terminal drop fall velocity.

Throughout the height h₁ + h₂, the GVC transfers gravitational potential energy from the droplet by means of the drag force of the droplet along the height h₁ + h₂, but along h₂ the relative velocity of the droplet with respect to the vapor is equal to or close to the terminal velocity of fall of the droplet in the vapor so that in this section displays the lowest possible level of energy dissipation. The GVC gravitational vapor compressor is the only vapor compression system and device that uses the gravitational potential energy of water droplets at terminal relative velocity, reducing the energy dissipation phenomena that occur in the case of relative velocities higher than the terminal velocity, as happens in current HID vapor compression and which limits the energy efficiency of current HID vapor compressors.

The GVC device is a liquid water vapor compressor consisting of a vertical compression chamber. The water vapor to be compressed is fed into the upper part of the compression chamber, which has a series of liquid water nozzles that form at least one beam of fine droplets. The compressor device operates with a low relative speed of the droplets with respect to the vapor flow, so that the phenomena of energy loss due to relative speed between the droplet and the gaseous medium in the upper part h₁ is limited and also the flow regime of the droplets at terminal velocity inside the vapor flow is laminar or of low energy dissipation along most of the height of the chamber (h₂).

Within the upper part of the compression chamber, the interaction between droplet flow and vapor flow occurs at relative velocities different to the terminal velocity of free fall between the droplets and the water vapor, which leads to lesser energy dissipation phenomena, given the lower relative velocity, along a height h₁, until the droplets reach the terminal velocity of free fall in the water vapor stream, so that the resultant force between gravity and buoyancy is equal to the drag force with the gaseous medium of water vapor and the droplet falls at a constant relative velocity in relation to the gas, at terminal velocity, so that the droplets transmit forces to the vapor that are transformed into greater pressure of the water vapor, compressing it with high energy efficiency.

In contrast with current compression systems using liquid water injection HID, a gravitational vapor compressor GVC performs inside the compression chamber an efficient transformation of the potential energy of the liquid droplet into potential energy of compression of the water vapor, keeps it in a saturated state, due to the intermediation of gravity the transfer of energy takes place in more efficient conditions, with minimum relative velocities and minimum energy dissipation.

The GVC device requires the input of potential energy by means of a liquid water pump in the form of low water pressure which is spent for the elevation of the water in height, breaking off the surface tension to form droplets and the initial kinetic energy of the droplets. To achieve droplets between 100 and 300 microns, market-available nozzles are currently used that operate at pressures between 1.5 and 3 bars and with droplet outlet velocities from the nozzle between 10 and 20 m/s.

Designing a GVC device involves determining the velocity of vapor flow according to the diameter of the cross-section of the compression chamber; the droplet diameter is determined according to the type of nozzles used and the pressure at which the liquid water is supplied to the nozzle, and the droplet diameter will determine the terminal velocity and, consequently, the time it takes for the drop to fall and the total mass of water drops falling at terminal velocity per unit of time; the difference between the nozzle velocity of the liquid drop and the velocity of water vapor flow is determined and this difference in velocities will cause the height h₁ to adjust to a flow of drops at terminal velocity within the vapor flow; the height h₂ of fall at terminal velocity is decided, where an efficient transformation of potential energy of liquid water into increased vapor potential energy in the form of greater pressure will be obtained. The combination of these parameters in the design of a GVC gravitational vapor compressor device coupled to a high-density latent heat exchanger of transition regions, allows the construction of GVCD gravitational vapor compression desalination devices, with aggregate energy efficiencies equal or greater than 60%, which allows seawater with a salinity of 45,000 ppm to be desalinated at less than 1.7 kWh/m³, when the current record for salinity of 40,000 ppm is 2.23 kWh/m³ using reverse osmosis devices.

A high-density transition region heat exchanger comprises heat exchanger tubes or chambers in which the water condensed on the condenser face and the aqueous solution to be evaporated on the evaporator face flow within channels whose walls are at a distance equal or less than 1 mm, so that the flow of water or aqueous solution within these channels has the liquid-gas interface curved over the entire wall-to-wall amplitude, which achieves a high density of transition regions on the surface of the evaporator and condenser faces.

In one embodiment of the high transition region density heat exchanger, it comprises evaporator-condenser tubes or chambers with a tube wall profile that in its cross-section perpendicular to the liquid flow has a sinusoidal, in a sawtooth or similar shape so that the entire liquid-gas interface of the water or aqueous solution flowing inside microchannels in which the adhesion forces of the water on the side wall of the microchannel curve its liquid-gas interface. The dimensions of the microchannels on the evaporating and condensing sides will depend on the adhesion and cohesion forces, and those in turn depend on the properties of the saline solution, the properties of the material of the tube wall or evaporator-condenser chamber, the slope of the microchannel walls and many other factors such as the finish, coating or treatment applied to the walls of the tube or evaporator-condenser chamber with hydrophilic or water-repellent properties.

In one embodiment, the faces of a tube wall or evaporator-condenser chamber of a high transition region density heat exchanger are made of marine aluminum alloys, with a profile of symmetrically alternating channels, in a sawtooth or zigzag pattern that forms microchannels both on the evaporator side and on the condenser side with a depth less than or equal to 1 mm and a distance between peaks or vertices of the microchannel less than or equal to 1 mm.

To achieve an evaporation and condensation cycle, the high-density heat exchanger of transition regions operates with a thermal jump or temperature difference between the aqueous solution to be evaporated on the evaporating side of the evaporator-condenser tube or chamber and the temperature of the secondary water vapor to be condensed on the condensing side of the evaporator-condenser tube or chamber less than or equal to 0.3°C plus the boiling point elevation (BPE) corresponding to the salinity and temperature of the aqueous solution to be evaporated.

This temperature difference of 0.3°C plus the BPE for seawater results in a temperature difference of less than 1°C compared to the 3°C that are usually required in current vapor-compression or mechanical vapor-compression desalination devices. The result achieved with the high-density heat exchanger of transition regions is a low temperature differential between the aqueous solution to be evaporated and the condensed fresh water. This is due to a structure of the tube wall or condenser evaporator chamber in which the forces of cohesion and adhesion of the water molecules position the flow of the aqueous solution to be evaporated on the evaporator side of the tube or condenser evaporator chamber and position the flow of condensed water on the condensing side of the tube or evaporator-condenser chamber so that the liquid-gas interface is curved across the entire flow amplitude between the walls of each microchannel and a high density of transition regions is achieved on the evaporator side and on the condensing side.

The result of positioning the liquid flows between microchannel walls in such a way that the adhesion and cohesion forces maintain the curvature of the liquid-gas interface throughout the entire width of the microchannel is to achieve a high surface density of water in the transition region on both the evaporator and condenser sides. To achieve a high density of transition regions simultaneously on both the evaporator and condenser sides, the wall of at least one tube or chamber of the evaporator-condenser latent heat exchanger must have the profile of the normal section of both the flow of saline solution to be evaporated and the flow of condensate, in a symmetrically alternating pattern in which the evaporating meniscus on the evaporating side is alternately inverted in relation to the condensing meniscus on the condensing side and so on along the perimeter of the evaporating-condensing tube or chamber, so that the transition regions of the evaporating menisci and the condensing menisci are in close proximity to each other.

### BRIEF DESCRIPTION OF THE FIGURES

A more detailed explanation of the invention is given in the following description, which is based on the attached FIGS.:
FIG. 1 shows a cross-sectional diagram of a GVC gravitational vapor compressor,
FIG. 2 shows a cross-sectional diagram of a GVC gravitational vapor compressor coupled to a high-density heat exchanger of transition regions,
FIG. 3 shows in a longitudinal cross-section diagram the three regions of an evaporator meniscus in proximity to the three regions of a condenser meniscus and highlights the properties of heat flow from a condensing transition region to a nearby evaporating transition region,
FIG. 4 shows in a schematic longitudinal section the three regions of an evaporator meniscus in proximity to the three regions of a condenser meniscus and highlights the properties of the heat flow from a condensing transition region and from a water-free zone of the condensing surface to an evaporating transition region, located in proximity, and

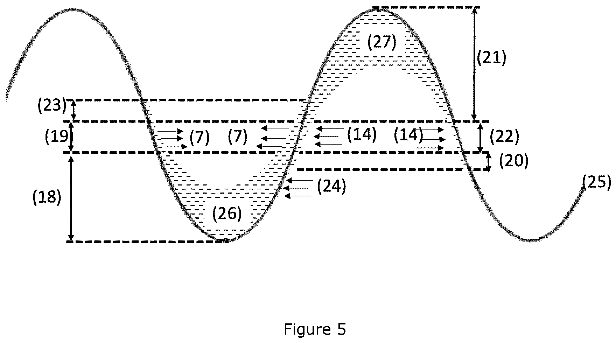

FIG. 5 shows in a schematic cross-section, perpendicular to the flow of aqueous solution on the evaporating side and to the flow of condensed water on the condensing side, of a section of the wall of an evaporator-condenser tube or chamber of a heat exchanger with a high density of transition regions, with an alternating or with a section pattern of the wall of the tube or the evaporator-condenser chamber following an even function symmetry section, in the form of an axis with bends on opposite sides, where an evaporator meniscus is rotated about 180^{o}, in inverse symmetry with respect to each of the two adjacent condenser meniscuses on the opposite side and the proximity of the microchannel walls of the evaporator side and the condenser side achieves the curvature of the liquid-gas interface, throughout the width of the microchannel from wall to wall, of the water flow from the condensing surface and the flow of aqueous solution from the evaporating surface, achieving a high density of transition regions on the surface of the evaporating surface and the condensing surface and achieving a high density of areas of high heat flow from the evaporating surface to the condensing surface, resulting in a high latent heat transfer coefficient of the latent heat exchanger, per unit of surface area and Kelvin degree of temperature difference.

### DETAILED DESCRIPTION OF THE INVENTION

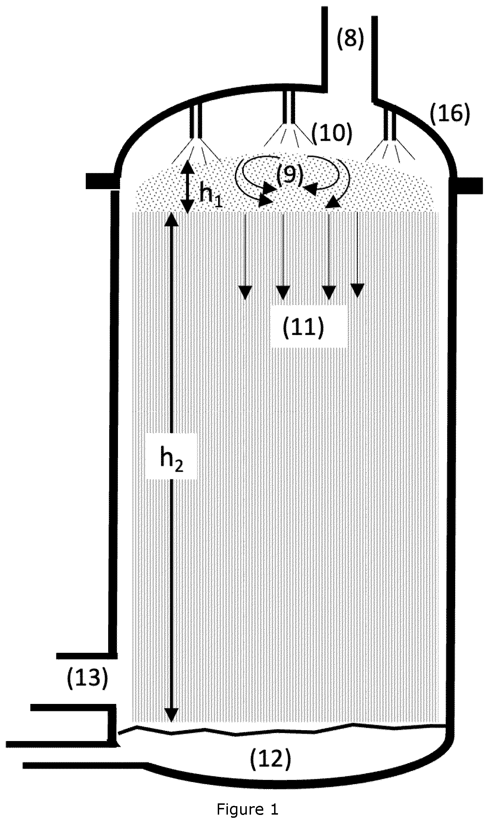

Referring now to FIGS. 1 to 5, a gravitational water vapor compressor device called GVC, comprises a vertical chamber with a first section h₁ for adjusting the velocity of flow of water droplets with a relative speed with respect to the vapor flow different to the terminal speed of the falling droplet and a second section h₂ of the compression chamber dedicated to a flow of droplets with a relative speed equal to or similar to the terminal speed of the droplet falling in the vapor flow. The GVC gravitational vapor compression device also includes nozzles in the upper part of the compression chamber that produce fine droplets of less than 300 microns and at a low relative droplet velocity with respect to the water vapor flow.

The GVC compressor device, if it operated with droplets greater than or equal to 300 microns, would lose energy efficiency given that the height of the compression chamber must be greater given the higher terminal velocity of the droplets as their diameter increases.

Designing the GVC gravitational vapor compression device involves determining the vapor flow velocity according to the inner diameter of the compression chamber; determining the droplet diameter according to the type of nozzles used and the pressure at which the liquid water is supplied to the nozzle; determining the terminal velocity of the droplet according to the droplet diameter distribution; the drop fall time is determined according to the terminal velocity and the velocity of vapor flow; the relative nozzle velocity of the drop in relation to the vapor flow is determined according to the type of nozzle and the water pressure applied to the nozzle which, in turn, will determine the height h₁ until the drops adjust to their terminal velocity; the height h₂ of fall at terminal velocity is decided along which the most efficient transformation of potential energy of liquid water into greater potential energy of vapor in the form of greater pressure of the compressed secondary vapor will be obtained.

Combining these parameters in the design of the GVC gravitational vapor compression device coupled to a high-density latent heat exchanger of transition regions allows the construction of GVCD gravitational vapor compression desalination devices with aggregate energy efficiencies greater than or equal to 60%, which allow desalination of seawater with a salinity of 45,000 ppm total dissolved solids below 1.7kWh/m³, while the current record is 2.23kWh/m³ using reverse osmosis devices.

Now referring to FIG. 1, which shows a vertical compression chamber 16 with a water vapor inlet 8 at the top of the chamber 16. In the upper part of chamber 16 there are several liquid water nozzles to which water is supplied at the necessary pressure to raise the water to a height h₁ + h₂ and to form sprays 10 of fine water droplets, less than or equal to 300 microns in diameter.

The GVC gravitational vapor compression device would work with droplets with a diameter greater than or equal to 300 microns, but the larger the droplet diameter, the higher its terminal velocity and the greater the height required of the compression chamber 16, which leads to a higher construction cost of the device and a higher energy cost of elevating the water.

Nozzles currently on the market form a spray of droplets with a diameter of between 100 and 300 microns with a water supply at a pressure of between 1.5 and 3 bars and with absolute nozzle velocities of the water droplets between 10 and 20 m/s.

Throughout the height h₁ of the compression chamber, the falling flow of liquid water droplets in the gaseous medium of vapor produces energy dissipation 9 due to the relative speed of the water flow with respect to the vapor flow, which is higher than the terminal velocity of the droplet.

When the water droplets reach their terminal velocity in the gaseous medium of water vapor, the flow of liquid water droplets in the gaseous medium of water vapor becomes an orderly, laminar 11 vertical drop in which the force of gravity on the drop is balanced by the drag and buoyancy forces of the drop in the gaseous medium and the drops fall at a stable relative speed with respect to the constant gas flow, at a terminal velocity, along the height h₂ of the compression chamber 16.

At the lower inner end of the compression chamber 16, the liquid water 12 corresponding to the liquid water droplets that have reached the end of their journey accumulates and is evacuated and pumped back, at least in part, to the upper nozzles to form new sprays of water 10 and the compressed water vapor nozzles in the compression chamber 16 through a secondary water vapor outlet duct 13 of higher pressure and temperature than the primary inlet vapor 8.

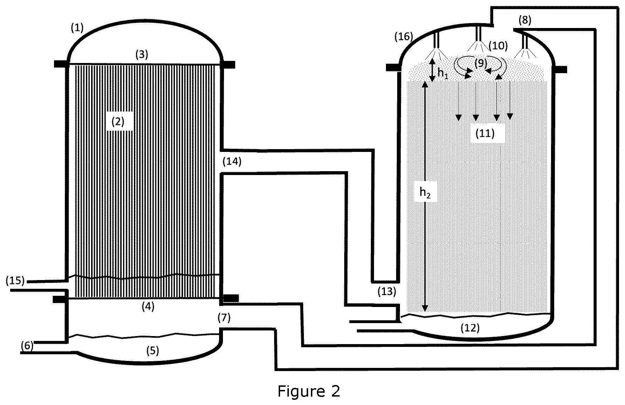

Now referring to FIG. 2, which shows a gravitational vapor compressor device GVC mechanically coupled to at least one shell and tubes device 1 with at least one high transition region density heat exchanger 2. On the upper part 3 of the inner surface of the tubes of the high density transition region heat exchanger 2, water to be desalinated is supplied, flowing along the evaporating inner surface of the heat exchanger tubes or chambers 2, and on the lower inner part 4 of the heat exchanger tubes or chambers there is an outlet for seawater or brine 5, which accumulates at the bottom of the shell 1 and primary water vapor 7 which flows through at least one conduit to the water vapor inlet 8 to be compressed in the upper part of the GVC gravitational vapor compressor.

The secondary (compressed) water vapor outlet 13 of the GVC is connected by a conduit to the secondary water vapor inlet 14 in the condenser chamber of the latent heat exchanger and the compressed water vapor condenses on the outer condenser face of the tubes or chambers of the high-density transition region heat exchanger 2. The condensed water accumulates at the bottom of the condenser chamber and is extracted through an evacuation duct.

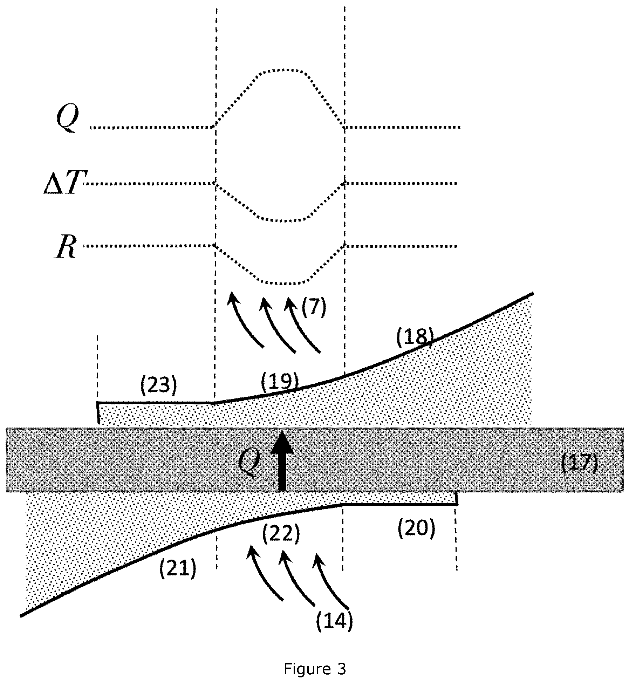

Referring now to FIG. 3, where the curved liquid-gas interface or liquid meniscus of the aqueous solution to be desalinated is shown on an evaporator face of at least one tube or chamber of at least one high-density heat exchanger of transition regions, it is divided into three regions: the adsorption region 23 where the thin liquid film is held tightly to the solid substrate 17 of the tube wall or condenser evaporator chamber by the intermolecular forces between the liquid and the solid, in this adsorption region 23 the thermal resistance by conduction is small and the interfacial thermal resistance is so large that evaporation is almost non-existent in this adsorption region 23, the massive region 18 of the meniscus with a high thermal resistance by thermal conduction due to the thickness of the water layer and where the thermal interfacial resistance is small, and the transition region 19 which is characterized by having the lowest aggregate thermal resistance and allowing the greatest flow Q of heat per unit surface area with the condensing transition region 22.

Referring to FIG. 3, which also shows the curved liquid-gas interface or condensed water meniscus on the condensing face of the high-density heat exchanger, the transition regions are divided into three regions: the adsorption region 20, the massive region 21 of the meniscus and the transition region 22. By placing the transition regions 19 and 22 in proximity, on either side of the wall 17 of the evaporator-condenser tube or chamber of a high transition region density heat exchange tube or chamber, a heat flow exchange passage Q is achieved through which the latent heat released by the vapor 14 condensed on the condenser transition region 22 flows with low thermal resistance and a low thermal gradient towards the evaporator transition region 19 where the energy Q is absorbed, at least in part, as latent heat of evaporation for the vapor 7 evaporated from the evaporator side.

A high density of transition regions on the condenser face and on the evaporator face achieve a high heat transfer coefficient per surface area unit and temperature gradient unit of the evaporator-condenser tube or chamber, which allows operation with low temperature differentials between the evaporator and condenser faces. Likewise, the design of the condensing surface with microchannels ensures the orderly passive drainage of the condensed water by capillarity inside the microchannels, ensuring the existence of surfaces free of thermally insulating water films.

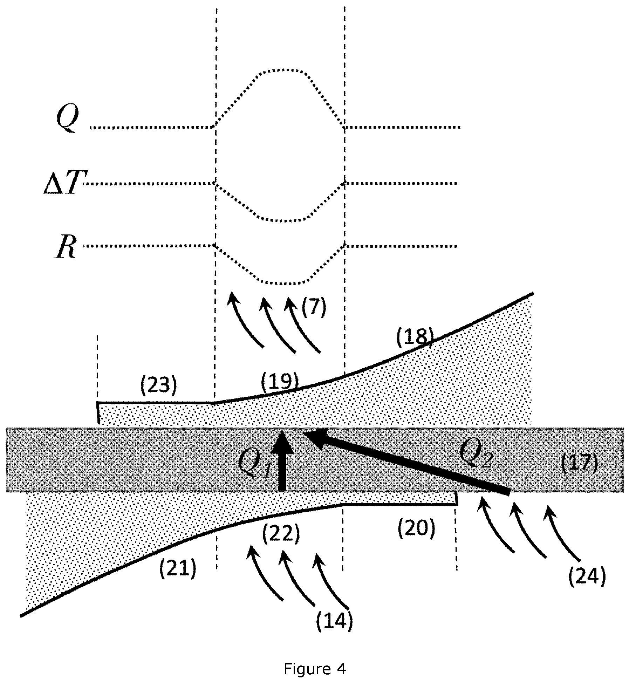

Referring now to FIG. 4, the condensing surface has water-free areas where vapor 24 condenses directly on the condensing surface of the wall 17 of at least one evaporator-condenser tube or chamber.

These water-free areas are produced by the design of the condensing surface with areas partially coated with a water-repellent layer that quickly repels the droplets formed by condensation. They are also produced as a result of the effects of free or forced dynamic oscillations in the flow of condensed water within the condensing structure and are also produced by the design of the microchannels with a depth greater than that covered by the flow of condensed water.

The proximity of the evaporator transition regions 19 to condenser transition regions 22 and to vapor condensation zones 24 without water on the condenser surface creates channels of high heat flow *Q₁, Q₂* and low thermal resistance.

FIG. 5 shows a schematic cross-section, perpendicular to the flow of aqueous solution on the evaporator side and the flow of condensed water on the condenser side, of a segment of wall 25 of a tube or an evaporator-condenser chamber of a high-density heat exchanger of transition regions showing the curved profile of the liquid-gas interface of the flow of saline solution 26 to be evaporated that flows inside a microchannel of the evaporator face, with curvature of the liquid-gas interface throughout the amplitude from to the wall of the microchannel, and the curved profile of the liquid-gas interface of the condensed water flow 27 that flows inside a microchannel of the condensing face, with curvature of the liquid-gas interface across the entire width from wall to wall of the microchannel. The curvature of the liquid-gas interface across the width of the microchannels that cover, at least in part the evaporator face and through which the saline solution to be evaporated flows 26 achieves a high density of transition regions 19 in the curvature of the liquid-vapor interface of the saline solution to be desalinated and with the consequent high density of areas with a high flow of latent heat of evaporation that absorbs the evaporated vapor 7. The curvature of the liquid-gas interface across the microchannels that cover, at least in part, the condensing face and through which the condensed water flows 27 achieves a high density of transition regions 22 in the curvature of the liquid-vapor interface of the condensed water and with the consequent high density of areas with a high flow of latent heat of condensation released by the condensed vapor 14.

The sinusoidal shape of the wall 25 alternates in successive inversions, with 180^{o} rotations, an evaporating meniscus 26 and a condensing meniscus 27 in inverse symmetry, such that the condensing transition region 22 of a condensing meniscus 27 where the condensation of vapor 14 takes place, releasing latent heat of condensation with a greater flow of energy per unit of surface area, is in proximity to an evaporating transition region 19 of an evaporating meniscus 26 absorbing latent heat of evaporation and generating primary vapor 7 with a greater flow of absorbed energy per unit of surface area. The high density of transition regions that occur in this alternating structure of evaporating microchannels and condensing microchannels or another structure in the form of a saw tooth, zigzag or similar achieve a high density of high-flow paths *Q₁* of energy in the form of latent heat released in the condenser transition region 22 and a high density of high-flow paths *Q₂* of energy in the form of latent heat released on a water-free surface of the condenser side where vapor condenses 24, which flow to the evaporator transition region 19 of the evaporator side where the energy is absorbed in the form of latent heat of evaporation in the generation of primary vapor 7.

One way of making the tubes or chambers of the heat exchanger-evaporator-condenser with a sinusoidal, zigzag, sawtooth or similar wall 25 is by extruding aluminum alloys or by stamping them to form microchannels 1 mm deep and 1 mm wide from crest to crest of each microchannel. A depth greater than 1 mm allows for greater flow velocities and longer evaporator condenser tubes or chambers. A microchannel depth of 1 mm or less results in more channels per unit perimeter of the evaporator condenser tube or chamber and, consequently, increases the number of transition regions per unit surface area of the evaporator condenser tube or chamber. For microchannel widths greater than 1 mm, as the width increases, flat, non-curved areas of the liquid-vapor interface appear, the density of transition regions is reduced, and the efficiency of the heat exchanger is reduced. In these flat areas of the liquid-vapor interface, the transmission of latent heat from both evaporation and condensation is very inefficient, which penalizes the efficiency of the heat exchanger. The sinusoidal shape is modified with a profile of angled ends, creating a zigzag shape, or with flat ends, creating a crenellated shape, instead of rounded ends of the sinusoidal shape.

The high density of transition regions is unattainable with current double-fluted, double-fluted evaporator-condenser tubes or chambers, designed to create turbulence in downward water flows since these tubes would form large areas of flat liquid-gas interface, and is unattainable with tubes that are grooved or slotted on one side only since this would result in the absence of transition regions on the non-grooved or non-slotted side.

The incorporation of a GVC vapor gravitational compressor into a shell and tube or chamber device with at least one heat exchanger with a high density of transition regions achieves seawater evaporation cycles of 45,000ppm total dissolved solids of salinity and condensation of secondary water vapor compressed by the gravitational vapor compressor GVC with pressure differences of around 100 Pa between the pressure of the evaporated primary value 7 on the inner evaporator side of the tubes or chambers of the high-density transition region heat exchanger 2 and the pressure of the compressed secondary vapor 14 condensed on the condensing side of the tube bundle of the high-density transition region heat exchanger 2. This increase in water vapor pressure is achieved with an aggregate energy efficiency of the full-height GVC gravitational vapor compressor, h₁ plus h₂, of more than 60%, resulting in specific energy consumption for desalinating seawater of 45,000ppm total dissolved solids below 1.7kWh/m³ of produced water, when the current record for specific energy consumption for desalination is 2.23 kWh/m³ and using reverse osmosis devices.

## Claims

1. A gravitational vapor compressor device GVC, **characterized in that** the gravitational vapor compressor device GVC comprises at least one vertical compression chamber (16), a plurality of nozzles (10) for generating a spray of droplets that form a flow of droplets in the flow of primary water vapor along a height h₁ of the vertical shell 16 in which the droplets of the droplet beams (10) adjust their speed until they reach a speed equal to or similar to the terminal speed of free fall in relation to the gas flow, comprises a height h2 of the compression chamber 16 in which the water droplets fall in an ordered flow (11) with a droplet velocity relative to the vapor flow equal to or close to the terminal velocity of the droplets in a water vapor flow and compress the water vapor and comprises a secondary vapor outlet duct (13).

2. Compressor device according to claim 1, wherein the gravitation vapor compressor device GVC is mechanically coupled to an evaporator condenser device (1), the primary vapor to be compressed (8) comes from the vapor evaporated (7) from the evaporating side of the condenser evaporator tubes or chambers of a heat exchanger (2) with a high density of transition regions and the secondary vapor (13) is provided as vapor to be condensed (14) on the condensing side of the condenser evaporator tubes or chambers of a heat exchanger (2) with a high density of transition regions.

3. Compressor device mechanically coupled to an evaporator condenser device according to claim 2, wherein the evaporator condenser device (1) comprises at least one high transition region density heat exchanger (2) where the evaporator face is covered, at least in part, of microchannels through which the saline solution to be evaporated flows with the liquid-gas interface curved across the entire width from wall to wall of the microchannel and by having the condensing face covered, at least in part, by microchannels through which the condensed water flows with the liquid-gas interface curved across the entire width from wall to wall of the microchannel.

4. Compressor device mechanically coupled to an evaporator condenser device (1) according to claim 3, wherein the heat exchanger of high-density of transition regions is **characterized by** the transition region (19) of a meniscus or curvature of the liquid-gas interface of the evaporator face being in proximity to a transition region (22) of a meniscus or curvature of the liquid gas water interface of the condensing surface or of a water-free zone of the condensing surface on which vapor condenses (24) and a short latent heat transfer pathway is created in which the flow of energy in the form of latent heat released by the vapor (14) condensed on the condensing transition region (22) of the condensing surface or the vapor (24) condensed on a water-free zone water on the condenser face flow with low thermal resistance, with a low temperature difference and with a high heat flow to the evaporator transition region (19) of the evaporator face where the energy flow is transformed, at least in part, into latent heat of evaporation of the evaporated vapor (7).
